(19) Europäisches Patentamt / European Patent Office / Office européen des brevets

(11) **EP 2 945 121 B1**

(12) **EUROPEAN PATENT SPECIFICATION**

(45) Date of publication and mention
of the grant of the patent:
**14.03.2018 Bulletin 2018/11**

(21) Application number: **14738295.6**

(22) Date of filing: **08.01.2014**

(51) Int Cl.:
*G06T 7/246* (2017.01)   *G06T 7/136* (2017.01)
*G06T 7/254* (2017.01)

(86) International application number:
**PCT/KR2014/000197**

(87) International publication number:
**WO 2014/109544 (17.07.2014 Gazette 2014/29)**

(54) **DEVICE AND METHOD FOR SENSING MOVING BALL AND METHOD FOR PROCESSING BALL IMAGE FOR SPIN CALCULATION OF MOVING BALL**

VORRICHTUNG UND VERFAHREN ZUR ERKENNUNG EINER BEWEGLICHEN KUGEL UND VERFAHREN ZUR VERARBEITUNG EINES KUGELBILDES ZUR DREHUNGSBERECHNUNG EINER BEWEGTEN KUGEL

DISPOSITIF ET PROCÉDÉ POUR DÉTECTER UNE BALLE EN MOUVEMENT ET PROCÉDÉ DE TRAITEMENT D'IMAGE DE BALLE POUR LE CALCUL DE LA ROTATION D'UNE BALLE EN MOUVEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.01.2013 KR 20130002202**

(43) Date of publication of application:
**18.11.2015 Bulletin 2015/47**

(73) Proprietor: **Golfzon Co., Ltd.**
**(Doryong-dong)**
**Yuseong-gu**
**Daejeon 305-340 (KR)**

(72) Inventor: **JOO, Sang-hyun**
**Daejeon 305-791 (KR)**

(74) Representative: **Cabinet Laurent & Charras**
**Le Contemporain**
**50 Chemin de la Bruyère**
**69574 Dardilly Cedex (FR)**

(56) References cited:
JP-A- 2000 019 186      JP-A- 2005 087 615
JP-A- 2005 270 500      KR-A- 20060 045 366
KR-A- 20120 033 946    US-A1- 2002 022 531
US-A1- 2004 032 970    US-A1- 2005 233 816
US-A1- 2006 008 116

• SHUM H ET AL: "Tracking the Translational and Rotational Movement of the Ball Using High-Speed Camera Movies", IMAGE PROCESSING, 2005. ICIP 2005. IEEE INTERNATIONAL CONFERENCE ON, IEEE, PISCATAWAY, NJ, USA,IEEE, vol. 3, 11 September 2005 (2005-09-11), pages 1084-1087, XP010851583, DOI: 10.1109/ICIP.2005.1530584 ISBN: 978-0-7803-9134-5

## Description

[Technical Field]

The present invention relates to a method and apparatus for sensing a moving ball, and an image processing method of a ball image for calculation of spin of a moving ball, for acquiring an image of the moving ball and processing and analyzing the image to calculate the spin of the ball.

[Background Art]

With regard to sports games, specifically, golf, attempts have always been made to accurately sense the physical characteristics of a moving ball that is hit by a golfer, to analyze the hit ball or to realize the hit ball in the form of an image using the sensed value, and to apply the result to simulated golf such as so-called screen golf.

In particular, when a ball is hit to fly, the ball rotates at very high speed with respect to an axis in a three-dimensional (3D) space, and thus, it is very difficult to measure spin of the ball and very expensive equipment is required to accurately measure the spin of the ball.

A representative method for measuring spin of a ball includes a method using a radar sensor or a method of analyzing a captured image using a high speed or ultrahigh speed camera. Among these methods, the method of calculating spin of the moving ball using the high speed or ultrahigh speed camera is performed by calculating a spin axis and spin amount of the moving ball by indicating a specific pattern on the ball and analyzing a change in the specific pattern indicated on the ball on images captured by the high speed or ultrahigh speed camera.

Here, the specific pattern is a simple shape and indicated on the ball using specific size and color or a photosensitive material, and thus, spin calculation is performed while the specific pattern is clearly differentiated in an image. For example, such methods are described in documents US 2002/022531A1, US 2006/008116A1 and US 2004/032970A1.

However, according to the method of indicating the specific pattern on the ball and analyzing an image of the pattern, it is inconvenient and cumbersome to indicate a specific pattern on each ball and it may be impossible to measure the spin of the ball as the pattern indicated on the ball becomes faint or is partially removed due to repeated measurement.

[Disclosure]

[Technical Problem]

Therefore, the present invention has been made in view of the above problems, and it is an object of the present invention to provide measurement of spin by acquiring an image of a moving ball according to hit and analyzing the image, and more particularly, a method and apparatus for sensing a moving ball, and an image processing method of a ball image, for measuring spin of the moving ball by rapidly and accurately extracting an unspecified indication such as a logo of a ball manufacturer, a trademark of the ball, a scratch, stain, etc. pre-indicated on the ball, that is, a feature portion in a simple manner, instead of indicating a specific pattern for spin measurement only, and then accurately calculating spin axis and spin amount information of rotation of the ball based on the feature portion.

[Technical Solution]

The object of the invention is achieved by the subject-matter of the independent claims. Advantageous embodiments are defined in the dependent claims.

[Advantageous Effects]

A method and apparatus for sensing a moving ball, and an image processing method of a ball image according to the present invention measure spin by acquiring an image of a moving ball according to hit and analyzing the image, and more particularly, measures spin of the moving ball by rapidly and accurately extracting an unspecified indication such as a logo of a ball manufacturer, a trademark of the ball, a scratch, stain, etc. pre-indicated on the ball, that is, a feature portion in a simple manner, instead of indicating a specific pattern for spin measurement only, and then accurately calculating spin axis and spin amount information of rotation of the ball based on the feature portion.

[Description of Drawings]

The above and other objects, features and other advantages of the present invention will be more clearly understood from the following detailed description taken in conjunction with the accompanying drawings, in which:

FIG. 1 is a schematic block diagram illustrating a structure of an apparatus for sensing a moving ball according to an embodiment of the present invention;
FIG. 2 is a diagram for explanation of functions of components from image acquisition to calculation of spin of a ball using components illustrated in FIG. 1;
FIGS. 3(a) to 3(c) are diagrams respectively illustrating source images of consecutively acquired images;
FIG. 4 is a diagram obtained by enlarging a ball portion of FIG. 3(a);
FIGS. 5(a) to 5(c) are diagrams for explanation of a process for extracting a ball portion from each of the source images illustrated in FIGS. 3(a) to 3(c);
FIGS. 6(a) to 6(c) are diagrams respectively illustrating normalized images of extracted ball images illustrated in FIGS. 5(a) to 5(c);

FIGS. 7(a) to 7(f) are diagrams of a time-series process of extracting a ball feature potion from the image illustrated in FIG. 6(a);

FIG. 8 is a diagram for explanation of calculation of spin of a moving ball; and

FIGS. 9(a) and 9(b) illustrate images obtained by normalizing ball images extracted from two consecutive source images, and FIGS. 9(c) and 9(d) illustrate feature portion images obtained by respectively extracting featuring portions from the images illustrated in FIGS. 9(a) and 9(b).

[Best Mode]

Hereinafter, exemplary embodiments of a method and apparatus for sensing a moving ball, and an image processing method of a ball image for calculation of spin of a moving ball according to the present invention will be described in detail with reference to the accompanying drawings.

The present invention may be basically configured to photograph a golf ball (hereinafter, referred to as a "ball"), which is hit by a golf club of a user, via a predetermined camera, to analyze the captured image, and to calculate spin of the hit ball. Here, the camera may be a three-dimensional (3D) camera or a stereo camera configured by a plurality of cameras in a stereo manner and may be configured to convert coordinates of a two-dimensional (2D) image of the ball into 3D coordinates or vice versa.

In addition, the method and apparatus for sensing a moving ball, and the image processing method of a ball image for calculation of spin of a ball according to the present invention may be applied to various fields such as analysis of a hit ball according to golf swing of a user, a virtual golf using a virtual reality-based simulation, and so on.

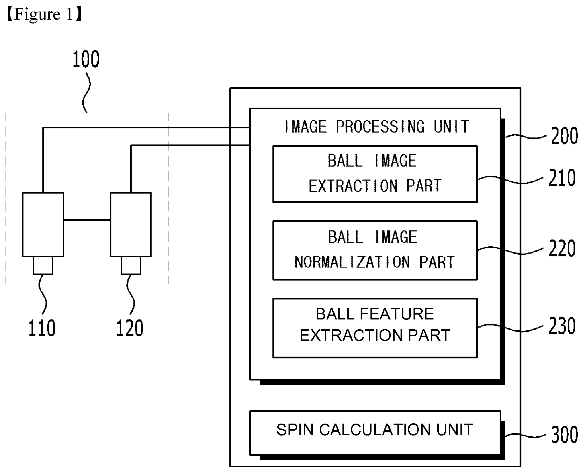

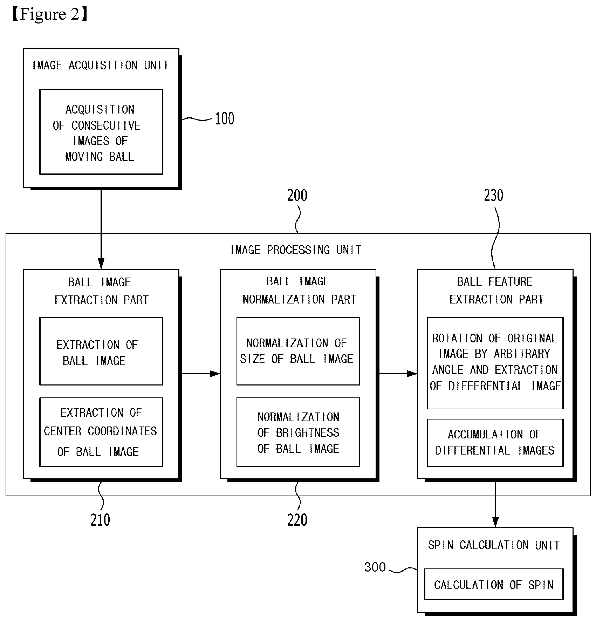

First, an apparatus for sensing a moving ball according to an embodiment of the present invention will be described with reference to FIGS. 1 and 2.

As illustrated in FIGS. 1 and 2, an apparatus for sensing a moving ball according to an embodiment of the present invention includes an image acquisition unit 100, an image processing unit 200, and a spin calculation unit 300.

The image acquisition unit 100 may be a camera device and may be embodied through a 3D camera device or a stereo camera including a plurality of cameras, as described above. FIG. 1 illustrates a case in which the image acquisition unit 100 is embodied as a stereo camera device including a first camera 110 and a second camera 120.

The image processing unit 200 is a component that extracts a ball image that is an image corresponding to a ball portion from each image acquired by the image acquisition unit 100 and removing a dimple portion and various noise portions from the ball image to extract a feature portion of the ball image, that is, an unspecified indication such as a trademark or a logo indicated on the ball, a scratch, etc.

The image processing unit 200 may include a ball image extraction part 210, a ball image normalization part 220, and a ball feature extraction part 230.

The ball image extraction part 210 is configured to extract a ball image that is an image corresponding to a ball portion from a source image that is an image acquired by the image acquisition unit 100 and to extract central coordinates of the ball portion, which will be described below in detail.

The ball image normalization part 220 is configured to normalize size and brightness of the ball, which vary on the source image according to a position of the ball in space by performing a normalization process on size and brightness information of each ball image extracted by the ball image extraction part 210, which will be described below in detail.

The ball feature extraction part 230 is a component that extracts the feature portion (i.e., an unspecified indication such as a trademark or a logo indicated on the ball, a scratch, etc.) indicated on the image on which image normalization is already performed by the ball image normalization part 220 from the ball image extracted by the ball image extraction part 210. To this end, only the feature portion is extracted while an arbitrary degree rotation step, a differential image step, and an accumulation step are repeatedly performed a predetermined number of times on an original image on which image normalization is performed by the ball image normalization part 220, which will be described below in detail.

The spin calculation unit 300 is configured to analyze a position change in feature portions that are respectively extracted from two consecutive ball images to calculate a spin axis and spin amount of a ball, which will be described below in detail.

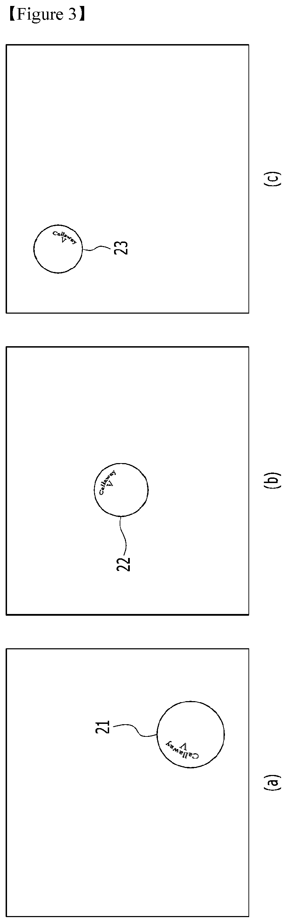

First, an example of a procedure of extracting the ball image from the source image acquired by the image acquisition unit 100 by the ball image extraction part 210 will be described in detail with reference to FIGS. 3 to 5.

FIGS. 3(a), 3(b), and 3(c) illustrate images in states in which only ball portions 21, 22, and 23 are remained by removing a background portion and so on using a differential image from images acquired by photographing a moving ball within a viewing angle via a fixed camera at a predetermined time interval.

As seen from FIGS. 3(a), 3(b), and 3(c), a current state is a state in which a ball flies in a left diagonal direction. As seen from FIGS. 3(a), 3(b), and 3(c), when the ball approaches a camera, the viewed ball is enlarged like the ball portion 21 as illustrated in FIG. 3(a), and then, as the ball gradually moves away from the camera, the viewed ball becomes smaller like the ball portions 22 and 23 as illustrated in FIGS. 3(b) and 3(c).

Here, the images illustrated in FIGS. 3(a), 3(b), and 3(c), that is, an image of a ball portion as a moving portion, remained by removing a background portion and various noise portions from an initially acquired image via a differential image, etc., is referred to as a source image.

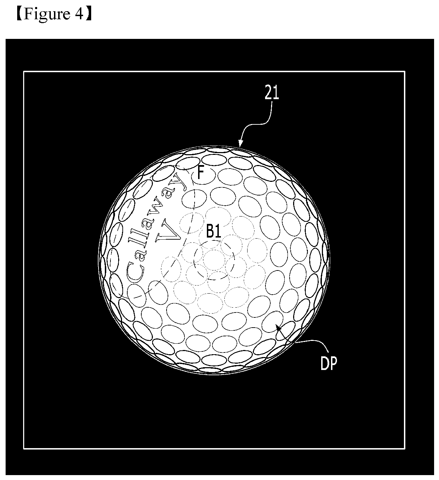

When the ball portion 21 on the source image is enlarged, the ball portion 21 may include various noises, e.g., so-called salt and pepper noise looking like partially scattered salt or pepper, fixed pattern noise generated at a fixed location, and so on as well as a dimple portion DP covering a surface of a ball and a ball feature portion F indicated on one side of the ball, and a lightest portion B1 and a darkest portion D1 appear via gradation due to influence of illumination applied to the ball, as illustrated in FIG. 4.

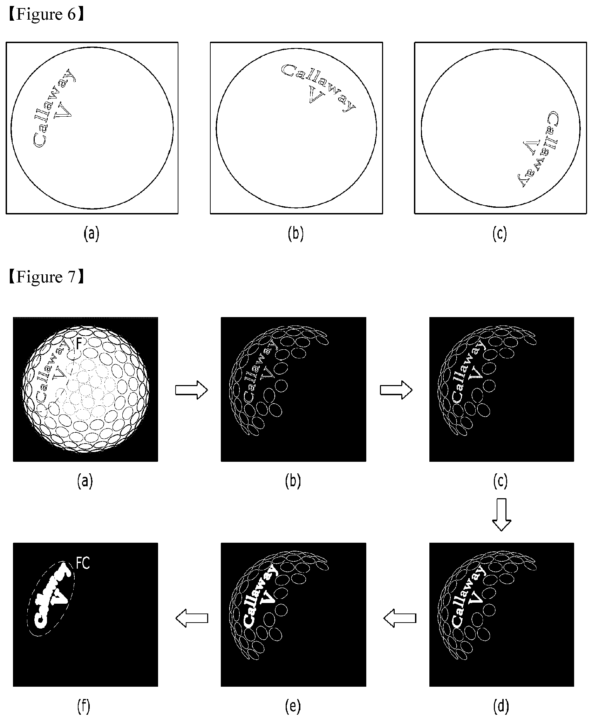

Here, in order to extract only a ball feature portion F, it is necessary to effectively and appropriately remove the dimple portion DP, influence of gradation, and various noises only while the ball feature portion F remains, which is performed by a ball feature extraction part, which will be described below with reference to FIG. 7.

In order to extract the ball feature portion F, it is necessary to effectively extract only images of the ball portions 21, 22, and 23, that is, only a ball image from the source image, as illustrated in FIG. 3.

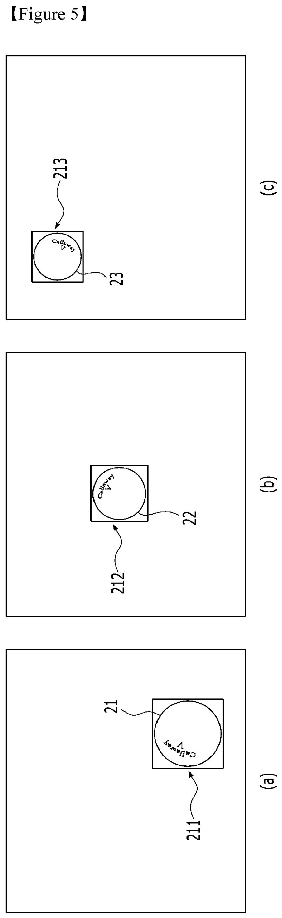

FIGS. 5(a), 5(b), and 5(c) illustrate a case in which only a ball portion is extracted from each source image. Here, the ball portions 21, 22, and 23 may be searched for and accurately extracted from source images such that a center of a ball portion is a center of an extracted ball image and an outline of the ball portion substantially corresponds to an outline of the extracted image.

Images obtained by extracting only the ball portions 21, 22, and 23 from the respective source images, that is, ball images 211, 212, and 213 have sizes corresponding to ball portions on the respective source images and thus have different sizes. The ball portions 21, 22, and 23 indicated on the respective source images are differently affected by illumination according to a distance from a camera and thus brightness also varies for each respective ball image.

In order to accurately extract a ball feature portion, it is necessary to equalize the sizes of the ball images 211, 212, and 213 and normalize the brightness of the ball images 211, 212, and 213.

FIGS. 6(a), 6(b), and 6(c) illustrate images containing ball images corresponding to FIGS. 5(a), 5(b), and 5(c), the size and brightness of which are normalized by a ball image normalization part.

That is, the ball images 211, 212, and 213 may be enlarged or reduced according to respective preset sizes or remaining ball images may be enlarged or reduced based on any one of the ball images 211, 212, and 213, that is, a normalization process may be performed on each ball image, thereby equalizing the sizes of ball images 211, 212, and 213.

In addition, a normalization process may be performed on each ball image using an average value of all pixels constituting a ball portion to equalize overall brightness of ball images to each other.

As described above, after normalization is completed on each ball image, an extraction process of the ball feature portion F via a ball feature extraction part is performed on each normalized ball image, as illustrated in FIG. 7.

FIG. 7(a) illustrates a normalized ball image which will be referred to as an original image. FIGS. 7(b), 7(c), 7(d), and 7(e) illustrate images obtained by sequentially accumulating differential images that are obtained by subtracting the original image from images formed by rotating a ball of the original image by an arbitrary angle. FIG. 7(f) is an image obtained by binarizing an accumulated image illustrated in FIG. 7(e).

The image illustrated in FIG. 7(b) is obtained by rotating the original image illustrated in FIG. 7(a) by a preset angle or an arbitrarily selected angle with respect to a central point of a ball and then extracting a differential image obtained by subtracting the original image from the image, the ball of which is rotated. Here, the image of FIG. 7(b) is referred to as a primary differential image. As the number of time for obtaining a differential image is increased, an order indicating the differential image is increased one by one.

In the differential image between the rotated image and the original image, a changed portion between the two images appears light and a non-changed portion between the two images appears dark, and thus, the feature portion F mainly appears light and the remaining portions appear almost dark.

Although the ball rotates, a dimple portion is almost the same before and after rotation and thus is almost a non-changed portion. Thus, the dimple portion is almost removed (dark area), and a gradation portion or various noise portions of the original image are removed.

However, a feature portion may not clearly appear via a differential image that is obtained one time. Accordingly, by extracting a differential image at another angle and accumulating the extracted differential image on the previous differential image, a light area of the image appears lighter, and thus, the feature portion appears lighter and more clearly.

FIG. 7(c) illustrates a secondary accumulated image obtained by accumulating a differential image that is obtained by subtracting the original image from an image formed by rotating a ball of the original image by a preset angle or an arbitrarily selected angle, that is, by accumulating a secondary differential image on the image illustrated in FIG. 7(b) as the primary differential image.

FIG. 7(d) illustrates a tertiary accumulated image obtained by accumulating a differential image that is obtained by subtracting the original image from an image formed by rotating a ball of the original image by a preset angle or an arbitrarily selected angle, that is, by accumulating a tertiary differential image on the image illustrated in FIG. 7(c) as the secondary accumulated image.

FIG. 7(e) illustrates a quaternary accumulated image obtained by accumulating a differential image that is obtained by subtracting the original image from an image formed by rotating a ball of the original image by a preset angle or an arbitrarily selected angle, that is, by accumulating a quaternary differential image on the image illustrated in FIG. 7(d) as the tertiary accumulated image.

As seen from the quaternary accumulated image obtained by sequentially accumulating the four differential images, that is, as seen from the image illustrated in FIG. 7(e), a feature portion appears very light and the remaining portions are almost completely removed to become an almost black area. However, dimple portions are not completely removed and partially appear.

Accordingly, in order to extract only the feature portion, the quaternary accumulated image is binarized via a threshold process or the like using a predetermined reference value to extract the image illustrated in FIG. 7(f).

The image illustrated in FIG. 7(f) is an image in which only a completely extracted feature portion FC appears and is referred to as a feature portion image.

Feature portions are respectively extracted from consecutive ball images, as described above, to prepare feature point images, and spin of the ball is calculated using the feature portion images by a spin calculation unit.

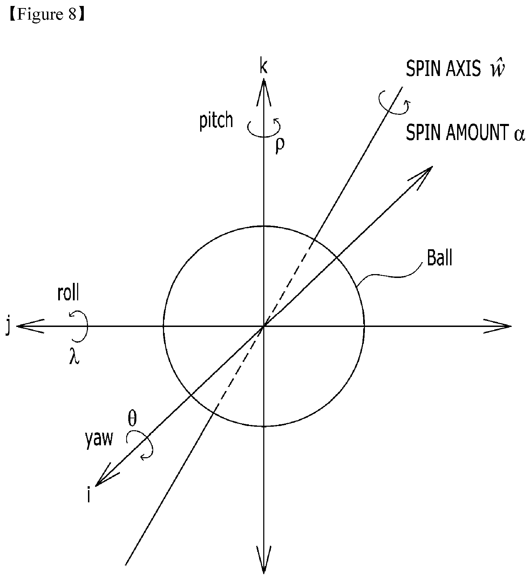

Here, the spin of the ball may be calculated by calculating coordinate information about a spin axis in 3D space based on an i-axis, j-axis, and k-axis coordinate system and an angle for rotation with respect to the spin axis, that is, information about a spin amount, as illustrated in FIG. 8.

As illustrated in FIG. 8, components for representing a rotational motion in a 3D space may include pitch, yaw, and roll. In addition, when a rotational component in an i-axis direction is $\theta$, a rotational component in a j-axis direction is $\lambda$, and a rotational component in a k-axis direction is $\rho$, a vector of target spin may be represented according to Equation 1 below.

[Equation 1]

$$\vec{\omega} = \theta\,\mathbf{i} + \lambda\,\mathbf{j} + \rho\,\mathbf{k}$$

Based on the spin vector ($\omega$), the spin axis information and the spin amount information may be calculated according to Equations 2 and 3 below, respectively. Here, $\alpha$ is the spin amount information.

[Equation 2]

$$\hat{\omega} = (\frac{\theta}{\alpha}, \frac{\lambda}{\alpha}, \frac{\rho}{\alpha})$$

[Equation 3]

$$\alpha = \sqrt{\theta^2 + \lambda^2 + \rho^2}$$

Accordingly, the spin axis and spin amount information may be obtained by calculating $\theta$ as a yaw rotational component of spin of a moving ball, $\lambda$ as a roll rotational component, and $\rho$ as a pitch rotational component.

The spin axis and spin amount information may be obtained from a feature portion extracted from the ball image shown in FIG. 7.

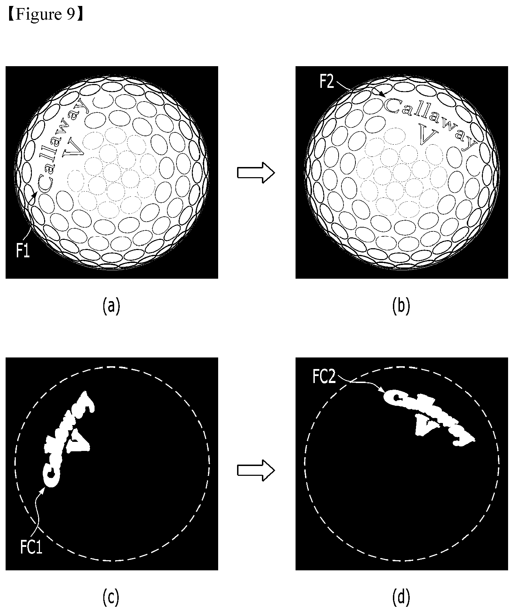

That is, as illustrated in FIG. 9, the spin axis and spin amount information may be extracted using a first feature portion image (FIG. 9(c)) and a second feature portion image (FIG. 9(d)) respectively including finally extracted feature portions FC1 and FC2 for the respective feature portions F1 and F2 on the two consecutive ball images (FIGS. 9(a) and 9(b)).

3D location information for each of pixels constituting the first feature portion image (FIG. 9(c)) may be obtained. Then, after arbitrary spin axis and spin amount information are applied to the obtained 3D location information, the result is compared with the second feature portion FC2 on the second feature portion image (FIG. 9(d)). In this case, when the result is the same or almost the same as the second feature portion FC2, the arbitrary spin axis and spin amount information is the final spin axis and spin amount information.

In this manner, arbitrary spin axis and spin amount information are repeatedly applied to the first feature portion FC1. Spin axis and spin amount information for allowing the result to be closest to the second feature portion FC2 may be selected as the final spin axis and spin amount information to calculate the spin information of the moving ball.

As described above, the present invention provides a method of rapidly and accurately extracting a feature portion of a ball portion from consecutively acquired source images in a simple manner to rapidly and accurately calculate spin of a ball based on the feature portion.

[Mode for Invention]

Various embodiments have been described in the best mode for carrying out the invention.

[Industrial Applicability]

A method and apparatus for sensing a moving ball, and an image processing method of a ball image for calculation of spin of a moving ball according to the present invention is applicable to an industrial field related to golf training including analyzing a hit ball according to golf swing, a so-called screen golf industrial field providing a virtual reality-based simulation to allow a user to play a virtual golf game, and so on.

**Claims**

1. An apparatus for sensing a moving ball, for acquiring and analyzing an image of the moving ball to calculate spin of the moving ball, the apparatus comprising:

   - an image acquisition unit (100) for acquiring consecutive images according to movement of a ball with a surface having a predetermined feature portion indicated thereon;
   - an image processing unit (200) for extracting a ball image as an image corresponding to a ball portion from each image acquired by the image acquisition unit (100), and removing a dimple portion and various noise portions from the ball image to extract the feature portion from the ball image; and
   - a spin calculation unit (300) for calculating a spin axis and spin amount of the moving ball by analyzing a position change in feature portions respectively extracted from two consecutive ball images,

   wherein the image processing unit (200) comprises:

   - a ball image extraction part (210) for extracting the ball image from a source image as the image acquired by the image acquisition unit (100), and extracting central coordinates of the ball image;
   - a ball image normalization part (220) for normalizing size and brightness of the ball image which vary on the source image according to a position of the ball in space, by performing a normalization process on size and brightness information of ball images (211, 212, 213) respectively extracted from consecutive source images; and
   - a ball feature extraction part (230) for extracting a feature portion (FC) from the normalized ball image, **characterized in that** the ball feature extraction part (230) is configured to

      ○ rotate a ball on an image normalized by the ball image normalization part (220), as an original image, by a preset angle or an arbitrarily selected angle,
      ○ extract a differential image of the rotated image with respect to the original image,
      ○ repeatedly perform rotation and extraction of the differential image a preset number of times, and accumulate the differential images, and
      ○ extract the feature portion by binarizing the accumulated image.

2. A method of sensing a moving ball, for acquiring and analyzing an image of the moving ball to calculate spin of the moving ball, the method comprising:

   - acquiring consecutive images according to movement of a ball with a surface having a predetermined feature portion indicated thereon;
   - extracting a ball image as an image corresponding to a ball portion from each of the acquired images;
   - extracting the feature portion from the ball image by removing a dimple portion and various noise portions from the ball image; and
   - calculating a spin axis and spin amount of the ball by analyzing a position change in feature portions respectively extracted from two consecutive ball images to calculate a spin axis and spin amount of the ball,
   - the extracting of the ball image comprising :

      ○ extracting the ball image from a source image as the acquired image and extracting central coordinates of the ball image, and

   - the extracting of the feature portion from the ball image comprising:

      ○ normalizing size and brightness of the ball image, which vary on the source image according to a position of the ball in space, by performing a normalization process on size and brightness information of ball images (211, 212, 213) respectively extracted from consecutive source images; **characterized in that**
      ○ extracting a feature portion (FC) from the ball image is performed by processing to:

         ▪ rotate a ball on an image normalized by the ball image normalization part (220), as an original image, by a preset angle or an arbitrarily selected angle,
         ▪ extract a differential image of the rotated image with respect to the original image,
         ▪ repeatedly perform rotation and extraction of the differential image a preset number of times, and accumulate the differential images, and
         ▪ extract the feature portion by binarizing the accumulated image.

3. The method according to claim 2, wherein the normalizing size and brightness of the ball comprises calculating an average value of pixel values of pixels of the extracted ball image and performing a normalization process based on the average value to normalize brightness of the ball.

**4.** The method according to claim 2, wherein the extracting the feature portion from the ball image comprises:

- extracting a primary differential image by rotating a ball on the extracted ball image as an original image by a preset angle or an arbitrarily selected angle and subtracting the original image from the rotated image;
- extracting an accumulated image by rotating the ball on the original image by a preset angle or an arbitrarily selected angle, extracting a secondary differential image obtained by subtracting the original image from the rotated image, and accumulating the secondary differential image on the primary differential image; and
- extracting a feature portion from the accumulated image.

**5.** The method according to claim 2, wherein the extracting the feature portion from the ball image comprises:

- rotating a ball on the extracted ball image as an original image by an arbitrary angle;
- extracting an n-th differential image obtained by subtracting the original image from the image, the ball of which is rotated;
- extracting an n-th accumulated image by accumulating the n-th differential image on an (n-1)th accumulated image; and
- extracting a feature portion from the n-th accumulated image, where n is a natural number equal to or greater than 2.

**6.** The method according to claim 5, wherein the extracting of the feature portion from the ball image comprises binarizing the n-th accumulated image according to a predetermined reference value.

**Patentansprüche**

**1.** Eine Vorrichtung zur Erkennung einer beweglichen Kugel, zur Erfassung und Analyse eines Bildes der beweglichen Kugel, um die Drehung einer beweglichen Kugel zu berechnen, wobei diese Vorrichtung umfasst:

- eine Bildaufnahmeeinheit (100) zur Aufnahme aufeinanderfolgender Bilder entsprechend der Bewegung einer Kugel, die eine Oberfläche mit einem vorher festgelegten Merkmalsabschnitt aufweist;
- eine Bildverarbeitungseinheit (200) zum Extrahieren eines Kugelbildes als Bild, entsprechend einem Kugelabschnitt aus jedem von der Bildaufnahmeeinheit (100) aufgenommenen Bild und zur Entfernung eines Dellenabschnitts und verschiedener Störungsabschnitte aus dem Kugelbild, um den Merkmalsabschnitt aus dem Kugelbild zu extrahieren; und
- eine Drehungsberechnungseinheit (300) zur Berechnung einer Drehungsachse und der Drehungshöhe der beweglichen Kugel durch Analyse einer Positionsänderung der Merkmalsabschnitte, die jeweils aus zwei aufeinanderfolgenden Kugelbildern extrahiert wurden,

wobei die Bildverarbeitungseinheit (200) umfasst:

- einen Bildextraktionsteil (210), um das Kugelbild aus einem Quellbild zu extrahieren, als das Bild, das von der Bildaufnahmeeinheit (100) aufgenommen wurde, und um zentrale Koordinaten des Kugelbildes zu extrahieren;
- einen Kugelbildnormalisierungsteil (220) zur Normalisierung von Größe und Helligkeit des Kugelbildes, die sich auf dem Quellbild entsprechend der Position der Kugel im Raum ändern, durch Durchführung eines Normalisierungsverfahrens bezüglich der Größen- und Helligkeitsinformation der Kugelbilder (211, 212, 213), die jeweils aus aufeinanderfolgenden Quellbildern extrahiert wurden; und
- einen Kugelmerkmalextraktionsteil (230) zur Extraktion eines Merkmalsabschnittes (FC) aus dem normalisierten Kugelbild, **dadurch gekennzeichnet, dass** das Kugelmerkmalextraktionsteil (230) dazu konfiguriert ist,

o um eine Kugel in einem durch das Kugelbildnormalisierungsteil (220) normalisierten Bild, als Originalbild, um einen vorher eingestellten Winkel oder einen willkürlich gewählten Winkel zu drehen,
o um ein Differenzbild des bezogen auf das Originalbild gedrehten Bildes zu extrahieren,
o um wiederholt eine Rotation und Extraktion des Differenzbildes in vorher festgelegter Häufigkeit durchzuführen und die Differenzbilder zu akkumulieren und den Merkmalsabschnitt durch Binarisierung des akkumulierten Bildes zu extrahieren.

**2.** Verfahren zur Erkennung einer beweglichen Kugel, zur Erfassung und Analyse eines Bildes der beweglichen Kugel, um die Drehung einer beweglichen Kugel zu berechnen, wobei dieses Verfahren umfasst:

- Aufnahme aufeinanderfolgender Bilder entsprechend der Bewegung einer Kugel, der eine Oberfläche mit einem vorher festgelegten Merkmalsabschnitt aufweist;
- Aufnahme aufeinanderfolgender Bilder entsprechend der Bewegung einer Kugel aus jedem der aufgenommenen Bilder ;

- Extrahieren des Merkmalabschnitts aus dem Kugelbild durch Entfernung eines Dellenabschnitts und verschiedener Störungsabschnitte aus dem Kugelbild; und

- Berechnung einer Drehungsachse und der Drehungshöhe der beweglichen Kugel durch Analyse einer Positionsänderung der Merkmalsabschnitte, die jeweils aus zwei aufeinanderfolgenden Kugelbildern extrahiert wurden,

- das Extrahieren des Kugelbildes umfasst:

  o Extrahieren des Kugelbildes von einem Quellbild als das aufgenommene Bild und Extrahieren der zentralen Koordinaten des Kugelbildes, und

- das Extrahieren des Merkmalsabschnitts aus dem Kugelbild umfasst:

  o Normalisierung der Größe und Helligkeit des Kugelbildes, die sich auf dem Quellbild entsprechend der Position der Kugel im Raum ändern, durch Durchführung eines Normalisierungsverfahrens bezüglich der Größen- und Helligkeitsinformation der Kugelbilder (211, 212, 213), die jeweils aus aufeinanderfolgenden Quellbildern extrahiert wurden; **dadurch gekennzeichnet, dass**

  o das Extrahieren eines Merkmalsabschnitts (FC) aus dem Kugelbild ausgeführt wird, indem

    ▪ eine Kugel in einem durch das Kugelbildnormalisierungsteil (220) normalisierten Bild als Originalbild um einen vorher gewählten Winkel oder einen willkürlich gewählten Winkel gedreht wird,
    ▪ ein Differenzbild des gedrehten Bildes bezogen auf das Originalbild extrahiert wurde,
    ▪ wiederholt eine Drehung und Extraktion des Differenzbildes in vorher festgelegter Häufigkeit durchgeführt wird und die Differenzbilder akkumuliert werden und
    ▪ der Merkmalsabschnitt durch Binarisierung des akkumulierten Bildes extrahiert wird.

3. Verfahren gemäß Anspruch 2, wobei die Normalisierungsgröße und -helligkeit der Kugel die Berechnung eines Durchschnittswerts der Pixelwerte der Pixel des extrahierten Kugelbildes und die Durchführung eines Normalisierungsverfahrens auf Basis des Durchschnittswertes zur Normalisierung der Helligkeit der Kugel umfasst.

4. Verfahren gemäß Anspruch 2, wobei die Extraktion des Merkmalsabschnittes aus dem Kugelbild umfasst:

  - Extraktion eines primären Differenzbildes durch Rotation einer Kugel im extrahierten Kugelbild als Originalbild um einen vorher gewählten Winkel oder einen willkürlich gewählten Winkel und Abzug des Originalbildes vom gedrehten Bild;
  - Extraktion eines akkumulierten Bildes durch Drehen der Kugel im Originalbild um einen vorher gewählten Winkel oder einen willkürlich gewählten Winkel durch Extraktion eines sekundären Differenzbildes, das Ergebnis der Subtraktion des Originalbildes vom gedrehten Bild ist und Akkumulieren des sekundären Differenzbildes mit dem primären Differenzbild und
  - Extraktion eines Merkmalsabschnitts vom akkumulierten Bild.

5. Verfahren gemäß Anspruch 2, wobei die Extraktion des Merkmalsabschnittes aus dem Kugelbild umfasst:

  - Rotation einer Kugel im extrahierten Kugelbild als Originalbild um einen vorher gewählten Winkel oder einen willkürlich gewählten Winkel,
  - Extraktion eines n-Differenzbildes, das durch Subtraktion des Originalbildes vom Bild erhalten wird, dessen Kugel gedreht wird.
  - Extraktion eines n-akkumulierten Bildes durch Akkumulation des n-Differenzbildes auf einem (n-1) - akkumulierten Bild; und
  - Extraktion eines Merkmalsabschnittes aus dem n-akkumulierten Kugelbild, wobei n eine natürliche Zahl gleich oder größer 2 ist.

6. Verfahren gemäß Anspruch 2, wobei die Extraktion des Merkmalsabschnittes aus dem Kugelbild die Binarisierung des n-akkumulierten Bildes gemäß einem vorher bestimmten Referenzwert umfasst.

**Revendications**

1. Appareil de détection d'une balle en mouvement, pour acquérir et analyser une image de la balle en mouvement afin de calculer la rotation de la balle en mouvement, l'appareil comprenant :

  - une unité d'acquisition d'images (100) pour acquérir des images consécutives conformément à un mouvement d'une balle ayant une surface présentant une partie caractéristique prédéterminée indiquée dessus ;
- une unité de traitement d'image (200) pour extraire une image de balle en tant qu'image correspondant à une partie de balle à partir de chaque image acquise par l'unité d'acquisition d'images (100), et retirer une partie d'alvéole et diverses parties de bruit de l'image de balle pour extraire la partie caractéristique de l'image de balle ; et
- une unité de calcul de rotation (300) pour calculer un axe de rotation et une quantité de rotation de la balle en mouvement en analysant un changement de position de parties caractéristiques respectivement extraites à partir de deux images de balle consécutives,

dans lequel l'unité de traitement d'image (200) comprend :

- une partie d'extraction d'image de balle (210) pour extraire l'image de balle à partir d'une image source en tant qu'image acquise par l'unité d'acquisition d'images (100), et extraire des coordonnées centrales de l'image de balle ;
- une partie de normalisation d'image de balle (220) pour normaliser la taille et la luminosité de l'image de balle qui varient sur l'image source en fonction d'une position de la balle dans l'espace, en effectuant un processus de normalisation sur des informations de taille et de luminosité des images de balle (211, 212, 213) respectivement extraites à partir d'images sources consécutives ; et
- une partie d'extraction de caractéristique de balle (230) pour extraire une partie caractéristique (FC) à partir de l'image de balle normalisée, **caractérisé en ce que** la partie d'extraction de caractéristique de balle (230) est configurée pour

o faire tourner une balle sur une image normalisée par la partie de normalisation d'image de balle (220), en tant qu'image originale, d'un angle prédéfini ou d'un angle sélectionné arbitrairement,
o extraire une image différentielle de l'image tournée par rapport à l'image originale,
o effectuer de manière répétée une rotation et une extraction de l'image différentielle un nombre prédéterminé de fois, et accumuler les images différentielles, et
o extraire la partie caractéristique en binarisant l'image accumulée.

2. Méthode de détection d'une balle en mouvement, pour acquérir et analyser une image de la balle en mouvement afin de calculer la rotation de la balle en mouvement, la méthode comprenant :

- acquérir des images consécutives en fonction d'un mouvement d'une balle ayant une surface présentant une partie caractéristique prédéterminée indiquée dessus ;
- extraire une image de balle en tant qu'image correspondant à une partie de balle à partir de chacune des images acquises ;
- extraire la partie caractéristique à partir de l'image de balle en retirant une partie d'alvéole et diverses parties de bruit de l'image de balle ; et
- calculer un axe de rotation et une quantité de rotation de la balle en analysant un changement de position des parties de caractéristiques extraites respectivement à partir de deux images de balle consécutives pour calculer un axe de rotation et une quantité de rotation de la balle,
- l'extraction de l'image de la balle comprenant :

o l'extraction de l'image de balle à partir d'une image source en tant qu'image acquise et l'extraction de coordonnées centrales de l'image de balle, et

- l'extraction de la partie caractéristique à partir de l'image de balle comprenant :

o la normalisation de la taille et la luminosité de l'image de la balle, qui varient sur l'image source en fonction d'une position de la balle dans l'espace, en effectuant un processus de normalisation sur des informations de taille et de luminosité d'images de balle (211, 212, 213) respectivement extraites à partir d'images sources consécutives ; **caractérisée en ce que**
o l'extraction d'une partie caractéristique (FC) à partir de l'image de balle est effectuée par un traitement consistant à :

☐ faire tourner une balle sur une image normalisée par la partie de normalisation d'image de balle (220), en tant qu'image originale, d'un angle prédéfini ou d'un angle arbitrairement sélectionné,
☐ extraire une image différentielle de l'image tournée par rapport à l'image originale,
☐ effectuer de manière répétée une rotation et une extraction de l'image différentielle un nombre prédéterminé de fois, et accumuler les images différentielles, et
☐ extraire la partie caractéristique en binarisant l'image accumulée.

3. Méthode selon la revendication 2, dans laquelle la normalisation de la taille et la luminosité de la balle comprend le calcul d'une valeur moyenne de valeurs de pixel de pixels de l'image de balle extraite et l'exécution d'un processus de normalisation basé sur la valeur moyenne pour normaliser la luminosité de la balle.

4. Méthode selon la revendication 2, dans laquelle l'extraction de la partie caractéristique à partir de l'image de balle comprend :

- extraire une image différentielle primaire en faisant tourner une balle sur l'image de balle extraite en tant qu'image originale d'un angle prédéfini ou d'un angle arbitrairement sélectionné et en soustrayant l'image originale de l'image tournée ;
- extraire une image accumulée en faisant tourner la balle sur l'image originale d'un angle prédéfini ou d'un angle arbitrairement sélectionné, extraire une image différentielle secondaire obtenue en soustrayant l'image originale de l'image tournée, et accumuler l'image différentielle secondaire sur l'image différentielle primaire ; et
- extraire une partie caractéristique à partir de l'image accumulée.

5. Méthode selon la revendication 2, dans laquelle l'extraction de la partie caractéristique à partir de l'image de balle comprend :

- faire tourner une balle sur l'image de balle extraite en tant qu'image originale d'un angle arbitraire ;
- extraire une n-ième image différentielle obtenue en soustrayant l'image originale de l'image dont la balle est tournée ;
- extraire une n-ième image accumulée en accumulant la n-ième image différentielle sur une (n-1)-ième image accumulée ; et
- extraire une partie caractéristique de la n-ième image accumulée, où n est un nombre naturel égal ou supérieur à 2.

6. Méthode selon la revendication 5, dans laquelle l'extraction de la partie caractéristique à partir de l'image de balle comprend la binarisation de la n-ième image accumulée conformément à une valeur de référence prédéterminée.

【Figure 1】

【Figure 2】

IMAGE ACQUISITION UNIT

ACQUISITION
OF CONSECUTIVE
IMAGES OF
MOVING BALL

~ 100

200

230

IMAGE PROCESSING UNIT

BALL IMAGE
EXTRACTION PART

EXTRACTION OF
BALL IMAGE

EXTRACTION OF
CENTER COORDINATES
OF BALL IMAGE

BALL IMAGE
NORMALIZATION PART

NORMALIZATION OF
SIZE OF BALL IMAGE

NORMALIZATION
OF BRIGHTNESS
OF BALL IMAGE

BALL FEATURE
EXTRACTION PART

ROTATION OF ORIGINAL
IMAGE BY ARBITRARY
ANGLE AND EXTRACTION
OF DIFFERENTIAL IMAGE

ACCUMULATION OF
DIFFERENTIAL IMAGES

210

220

SPIN CALCULATION UNIT

CALCULATION OF SPIN

300

【Figure 3】

(a)　　(b)　　(c)

【Figure 4】

【Figure 5】

(a)      (b)      (c)

【Figure 6】

(a)  (b)  (c)

【Figure 7】

(a)  (b)  (c)

(f)  (e)  (d)

【Figure 8】

【Figure 9】

(a)

(b)

(c)

(d)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002022531 A1
- US 2006008116 A1
- US 2004032970 A1